# EUROPÄISCHE PATENTSCHRIFT

(11) **EP 1 678 877 B1**
(45) Veröffentlichungstag und Bekanntmachung des Hinweises auf die Patenterteilung: **25.03.2009**
(21) Anmeldenummer: 04766741.5
(22) Anmeldetag: 08.09.2004
(51) Int. Cl.: H04L 12/28, H04L 12/56

(54) **VERFAHREN ZUR ÜBERTRAGUNG VON INFORMATIONEN IN EINEM KOMMUNIKATIONSSYSTEM UNTER VERWENDUNG EINES PFADES**
METHOD FOR THE TRANSMISSION OF INFORMATION IN A COMMUNICATION SYSTEM USING A PATH
PROCEDE POUR TRANSMETTRE DES INFORMATIONS DANS UN SYSTEME DE COMMUNICATION A L'AIDE D'UN CHEMIN

(30) Priorität: 31.10.2003 DE 10350891
(43) Veröffentlichungstag der Anmeldung: 12.07.2006
(73) Patentinhaber: Nokia Siemens Networks GmbH & Co. KG, 81541 München (DE)
(72) Erfinder: GRUBER, Ingo, 80634 München (DE); LI, Hui Chateau Regency E802, Beijing 100102 (CN)
(86) Internationale Anmeldenummer: PCT/EP2004/052088
(87) Internationale Veröffentlichungsnummer: WO 2005/043822

(56) Entgegenhaltungen:
- EP-A- 0 282 198
- AU-B2- 607 331
- US-A- 6 092 096
- ROYER E M ET AL: "A REVIEW OF CURRENT ROUTING PROTOCOLS FOR AD HOC MOBILE WIRELESS NETWORKS" IEEE PERSONAL COMMUNICATIONS, IEEE COMMUNICATIONS SOCIETY, US, Bd. 6, Nr. 2, April 1999 (1999-04), Seiten 46-55, XP000823968 ISSN: 1070-9916

## Beschreibung

Die Erfindung betrifft ein Verfahren zur Übertragung von Informationen in einem Kommunikationssystem mit einer Mehrzahl von Knoten. Weiterhin betrifft die Erfindung einen Knoten in einem Kommunikationssystem.

Zur Kommunikation bzw. zur Übertragung von Informationen ist eine Vielzahl verschiedenartiger Kommunikationssysteme bekannt. So werden beispielsweise in Funkkommunikationssystemen Informationen (wie Sprache, Bildinformation, Videoinformation, SMS (Short Message Service), MMS (Multimedia Messaging Service) oder andere Daten) mit Hilfe von elektromagnetischen Wellen über eine Funkschnittstelle zwischen Quell- und Ziel-Knoten übertragen. Bei den Knoten eines Funkkommunikationssystems kann es sich hierbei je nach konkreter Ausgestaltung des Funkkommunikationssystems um verschiedenartige teilnehmerseitige Funkstationen, Funkzugangspunkte oder Basisstationen handeln. Das Abstrahlen der elektromagnetischen Wellen erfolgt dabei mit Trägerfrequenzen, die in dem für das jeweilige System vorgesehenen Frequenzband liegen.

Funkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funkkommunikationssystemen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM.

In einem Adhoc-Modus eines Funkkommunikationssystems können Funkstationen über einen oder mehrere Sprünge (Hop bzw. Multihop) miteinander kommunizieren, ohne dass vermittelnde Einrichtungen wie z.B. Basisstationen oder Funkzugangspunkte zwischengeschaltet werden müssen. Beabsichtigt eine Funkstation die Übertragung von Daten an eine andere Funkstation außerhalb ihres Funkabdeckungsbereiches, wie es z.B. in einem Adhoc-Modus oftmals der Fall ist, so muss zuerst ein Pfad zwischen der Funkstation als dem Quell-Knoten und dem Empfänger der Daten als dem Ziel-Knoten ermittelt werden. Ein Pfad verläuft über eine oder mehrere Knoten, welche Informationen bei einer Datenübertragung zwischen Quell-Knoten und Ziel-Knoten weiterleiten. Bei den Knoten des Pfades handelt es sich somit in einem Funkkommunikationssystem um jeweils benachbarte Funkstationen, welche direkt über Funk miteinander kommunizieren können.

Ein häufig angewandtes Verfahren zur dezentralen Pfadermittlung (Routing) in einem Kommunikationssystem ist das DSR (Dynamic Source Routing) Verfahren. Hierbei ermitteln die Knoten des Kommunikationssystems einen Pfad zwischen einem Quell-und einem Ziel-Knoten, wobei als Ergebnis des Verfahrens sowohl der Quell- als auch der Ziel-Knoten einen oder mehrere vollständige Pfade kennen. Jede von dem Quell- zu dem Ziel-Knoten gesendete Nachricht umfasst dann die Angabe eines ermittelten Pfades, so dass die Knoten des Pfades die Nachricht gemäß der Pfadangabe weiterleiten können. Die Angabe des zu verwendenden Pfades in jeder Nachricht entspricht jedoch einem großen Signalisierungsaufwand und somit einer ineffizienten Nutzung der in der Regel knappen Übertragungsressourcen.

Ein alternativ angewandtes Routing-Verfahren ist das AODV (Ad-hoc On-demand Distance Vector Routing) Verfahren, bei dem als Ergebnis der Quell- und der Ziel-Knoten nicht den vollständigen Pfad, sondern lediglich den ihnen entlang dem Pfad jeweils benachbarten Knoten kennen. Weiterhin kennt nach Abschluss der Pfadermittlung jeder Knoten des Pfades seine benachbarten Knoten entlang des Pfades, so dass bei einer Nachrichtenübertragung von dem Quell- zum Ziel-Knoten die Nachricht keine Angabe über den zu verwendenden Pfades enthält. Ein Nachteil des AODV Verfahrens ist, dass nicht eine Mehrzahl von Pfaden alternativ verwendet werden kann. Vielmehr muss in dem Fall, dass der ermittelte Pfad nicht mehr zur Nachrichtenübertragung verwendet werden kann, ein neues Verfahren zur Pfadermittlung durchgeführt werden. Ressourcensparender hingegen ist es, wenn als Ergebnis einer Pfadermittlung mehrere Pfade erhalten werden, so dass die ermittelten Pfade eine längere Zeit benutzt werden können.

Das Dokument AU-B-34925/89 beschreibt ein Verfahren zur Übertragung von Informationen in einem Telekommunikationssystem. Versendete Pakete enthalten eine "route sequence number". Ein erster "switching exchange" liest die ersten beiden Bits der "route sequence number" aus, welche ihm anzeigen, dass das Paket an den zweiten "switching exchange" zu senden ist. Der zweite "switching exchange" liest die nächsten beiden Bits der "route sequence number" aus, welche ihm anzeigen, dass das Paket an den dritten "switching exchange" zu senden ist, usw.

Das Dokument US 6,092,096 beschreibt die Routenermittlung unter Verwendung eines "directory service". Beabsichtigt ein Knoten die Versendung einer Nachricht an einen Zielknoten, kontaktiert der Knoten den "directory service". Nach Ermittlung eines Pfades durch den "directory service" wird dem Knoten ein Nachbarknoten mitgeteilt, an welchen die Nachricht für den Zielknoten zu versenden ist. Ein Knoten kann den ihm von dem "directory service" mitgeteilten Nachbarknoten speichern, so dass eine erneute Befragung des "directory service" nicht nötig ist.

Der Erfindung liegt die Aufgabe zugrunde, ein Verfahren vorzustellen, welches eine übertragungsressourcensparende Übertragung von Nachrichten zwischen einem Quell- und einem Ziel-Knoten eines Kommunikationssystems ermöglicht. Weiterhin soll ein Knoten zur Durchführung des Verfahrens aufgezeigt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

In dem Verfahren zur Übertragung von Informationen in einem Kommunikationssystem mit einer Mehrzahl von Knoten empfängt mindestens ein Knoten eine Nachricht umfassend die Angabe von mindestens einem von einem Quell-Knoten über den mindestens einen Knoten zu einem Ziel-Knoten verlaufenden Pfad. Erfindungsgemäß speichert der mindestens eine Knoten unter Verwendung der Angabe des mindestens einen Pfades Identifikationsinformationen betreffend die beiden dem mindestens einen Knoten entlang dem mindestens einen Pfad benachbarten Knoten. Weiterhin leitet der mindestens eine Knoten die Nachricht entlang dem mindestens einen Pfad weiter.

Bei dem Kommunikationssystem kann es sich zum Beispiel um ein Funkkommunikationssystem, aber um ein leitungsgebundenes Kommunikationssystem handeln. Die Knoten des Kommunikationssystems sind entsprechend dem Kommunikationssystem ausgestaltet, bei einem Funkkommunikationssystem kann es sich bei den Knoten zum Beispiel um teilnehmerseitige Funkstationen, um Repeater oder andere netzseitige Einrichtungen handeln.

Ein Pfad innerhalb des Kommuni.kationssystems verläuft jeweils von einem Quell-Knoten zu einem Ziel-Knoten. Wird eine Nachricht über den Pfad übertragen, so ist der Quell-Knoten der Sender der Nachricht, und der Ziel-Knoten der adressierte Empfänger der Nachricht. Ein Pfad besteht somit aus einem Quell- und einem Ziel-Knoten, sowie aus den weiteren Knoten des Pfades, welche Informationen zwischen Quell- und Ziel-Knoten weiterleiten. Die Angabe von einem Pfad kann somit eine Mitteilung von Quell-Knoten, Ziel-Knoten, sowie Knoten des Pfades, über welche der Pfad verläuft, beinhalten.

Gemäß der Erfindung wird eine Nachricht verwendet, welche die Angabe von mindestens einem Pfad umfasst, daher kann sie als Pfadnachricht bezeichnet werden. Neben der Angabe des mindestens einen Pfades kann die Pfadnachricht jedoch auch andere Informationen, wie zum Beispiel Nutz- und/oder Signalisierungsinformationen, enthalten.

Der mindestens eine Knoten, welcher die Pfadnachricht empfängt, speichert Identifikationsinformationen seiner entlang dem Pfad benachbarten Knoten. Diese Identifikationsinformationen kann der mindestens eine Knoten der Pfadnachricht direkt oder indirekt entnehmen. Verläuft der Pfad über nur einen Knoten, so handelt es sich bei den benachbarten Knoten dieses Knotens um den Quell-Knoten und den Ziel-Knoten. Bei Vorliegen einer Mehrzahl von Knoten des Pfades kann es sich bei den benachbarten Knoten entweder um den Quell-Knoten und einen weiteren Knoten, oder um zwei weitere Knoten, oder um einen weiteren Knoten und den Ziel-Knoten des Pfades handeln. Die Identifikationsinformationen erlauben es dem Knoten zumindest, in seiner näheren Umgebung denjenigen Knoten, welchen die Identifikationsinformationen betreffen, eindeutig zu adressieren. Es ist jedoch auch möglich, dass die Identifikationsinformationen eine eindeutige Adressierung des betreffenden Knotens innerhalb von Teilen oder innerhalb des gesamten Kommunikationssystems ermöglichen. Die Identifikationsinformationen können dem betreffenden Knoten zeitweilig oder permanent zugeordnet sein.

In Weiterbildung der Erfindung wird die Nachricht umfassend die Angabe des mindestens einen Pfades von dem Quell-Knoten des mindestens einen Pfades gesendet. Der ursprüngliche Sender der Pfadnachricht ist somit der Quell-Knoten des Pfades. Der mindestens einen Knoten, welcher die Pfadnachricht empfängt und daraufhin die Identifikationsinformationen seiner Nachbarknoten speichert, kann die Pfadnachricht entweder direkt von dem Quell-Knoten empfangen, oder auch von einem anderen, die Pfadnachricht weiterleitenden Knoten.

Vorteilhafterweise wird mindestens eine weitere Nachricht, welche keine Angaben über den zur Übertragung der mindestens einen weiteren Nachricht zu verwendenden Pfad umfasst, von dem Quell-Knoten über den mindestens einen Pfad zu dem Ziel-Knoten unter Verwendung von gespeicherten Identifikationsinformationen übertragen. Aufgrund der vorangegangenen Speicherung von Identifikationsinformationen der Knoten von mindestens einem Pfad können nun Nachrichten über diesen mindestens einen Pfad übertragen werden, ohne dass diese Nachrichten eine Angabe des zu verwendenden Pfades beinhalten müssen.

Einer Weiterbildung der Erfindung gemäß wird nach einer gescheiterten Übertragung der weiteren Nachricht von dem Quell-Knoten über den mindestens einen Pfad zu dem Ziel-Knoten, welche keine Angaben über den zur Übertragung zu verwendenden Pfad umfasst, eine Nachricht umfassend die Angabe des mindestens einen Pfades von dem Quell-Knoten des mindestens einen Pfades gesendet. Eine gescheiterte Übertragung bedeutet, dass die jeweilige Nachricht nicht den Ziel-Knoten erreicht. Die Übertragung der weiteren Nachricht, welche keine Angabe des zu verwendenden Pfades umfasst, ist gescheitert und somit nicht vollständig, sondern höchstens teilweise erfolgt. Aufgrund der gescheiterten Übertragung wird erneut eine Pfadnachricht gesendet. Diese Pfadnachricht umfasst vorteilhafterweise neben der Angabe des Pfades auch den Inhalt derjenigen Nachricht, deren Übertragung gescheitert ist.

Mit Vorzug wurde der mindestens eine Pfad unter Mitwirkung einer Einrichtung, welcher Nachbarschaftsbeziehungen zwischen Knoten des Kommunikationssystems bekannt sind, ermittelt. Bei einem Funkkommunikationssystem kann es sich bei einer solchen Einrichtung zum Beispiel um eine Basisstation oder um eine mit einer Basisstation verbundene Einrichtung handeln. Die Einrichtung ermittelt den Pfad insbesondere auf Anfrage des Quell-Knotens. Nach der Ermittlung des Pfades kann die Einrichtung dann Angaben über den ermittelten Pfad an den Quell-Knoten versenden, woraufhin dieser die Angaben über den Pfad in eine Pfadnachricht einfügt und die Pfadnachricht an den ihm entlang des Pfades benachbarten Knoten sendet. Alternativ zu einer solchen zentralen Ermittlung des Pfades durch eine Einrichtung unter Verwendung der Netzwerktopologie kann der mindestens eine Pfad auch durch Knoten ermittelt werden, welche keine Informationen über die Topologie des gesamten Netzwerkes aufweisen. Ein Beispiel hierfür ist die Pfadermittlung durch gleichberechtigte Knoten eines Adhoc-Systems, zum Beispiel nach einem DSR Verfahren.

In einer Ausgestaltung der Erfindung empfangen alle Knoten, über welche der mindestens eine Pfad verläuft, die Nachricht umfassend die Angabe des mindestens einen Pfades. Weiterhin speichern diese Knoten Identifikationsinformationen betreffend die beiden dem jeweiligen Knoten entlang dem Pfad benachbarten Knoten. Insbesondere empfangen alle Knoten des Pfades die Pfadnachricht nacheinander durch eine Weiterleitung der Pfadnachricht durch den ihnen entlang des Pfades jeweils vorangegangenen Knoten.

Es ist vorteilhaft, dass der mindestens eine Knoten eine Nachricht umfassend die Angabe von mehreren über den mindestens einen Knoten verlaufenden Pfaden empfängt und Identifikationsinformationen der jeweils beiden dem mindestens einen Knoten entlang den mehreren Pfaden benachbarten Knoten speichert. In diesem Fall enthält die Pfadnachricht eine Angabe einer Mehrzahl von Pfaden, woraufhin der mindestens eine Knoten nach dem Empfang der Pfadnachricht eine Mehrzahl von Paaren an jeweils ihm entlang eines Pfades benachbarten Knoten speichert. Alternativ zur Verwendung einer Pfadnachricht mit der Angabe einer Mehrzahl von Pfaden können auch eine Mehrzahl von Pfadnachrichten verwendet werden, welche jeweils die Angabe eines Pfades umfassen. Die Angabe von mehreren Pfaden, unabhängig davon, ob sie in einem oder in mehreren Pfadnachrichten erfolgt, hat den Vorteil, dass bei Übertragungsschwierigkeiten entlang einem der Pfade ein anderer Pfad zur Übertragung von Nachrichten eingesetzt werden kann.

In Weiterbildung der Erfindung speichert der mindestens eine Knoten nach dem Empfang einer von dem Quell-Knoten an den Ziel-Knoten des mindestens einen Pfades gerichteten Nachricht von einem Knoten, betreffend welchen er keine Identifikationsinformationen als entlang dem mindestens einen Pfad benachbarter Knoten gespeichert hat, Identifikationsinformationen dieses Knotens als entlang des mindestens einen Pfads benachbarter Knoten. In diesem Fall erkennt der mindestens eine Knoten, dass er eine Nachricht, welche von dem Quell- an den Ziel-Knoten gesendet werden soll, von einem anderen Knoten empfängt, als er als benachbarter Knoten entlang dem Pfad zwischen Quell- und Ziel-Knoten gespeichert hat. Daraufhin speichert der mindestens eine Knoten Identifikationsinformationen dieses ihm als benachbarter Knoten entlang des Pfades unbekannten Knotens, wobei diese neuen Identifikationsinformationen die bislang gespeicherten Identifikationsinformationen des Nachbarn zu Seiten des Quell-Knotens in Bezug auf den Pfad zwischen Quell- und Ziel-Knoten überschreiben kann. Bei einer Weiterleitung oder Versendung einer Nachricht an den Quell-Knoten können die neuen Identifikationsinformationen zur Adressierung des benachbarten Knotens verwendet werden.

Vorzugsweise speichert der mindestens eine Knoten, nachdem er eine Angabe von einem von dem mindestens einen Pfad abweichenden weiteren Pfad zwischen dem mindestens einen Knoten und dem Ziel-Knoten empfangen hat, Identifikationsinformationen des dem mindestens einen Knoten entlang dem weiteren Pfad benachbarten Knotens. In diesem Fall speichert der mindestens eine Knoten Identifikationsinformationen eines neuen, ihm in Richtung des Ziel-Knotens entlang einem weiteren Pfad benachbarten Knotens. Diese neuen Identifikationsinformationen können die bisher gespeicherten Identifikationsinformationen des Nachbarn in Richtung des Ziel-Knotens in Bezug auf mindestens eine Pfad zwischen Quell- und Ziel-Knoten überschreiben. Bei einer zukünftigen Weiterleitung von Informationen an den Ziel-Knoten können die neuen Identifikationsinformationen zur Adressierung verwendet werden. Dieses Vorgehen entspricht einem update des bei einer Nachrichtenübertragung von dem Quell- zu dem Zielknoten zu verwendenden Pfades. Die Angabe des weiteren Pfades kann der mindestens eine Knoten z.B. von einer Einrichtung empfangen, welche einen Überblick über die Netzwerktopologie hat.

Die oben genannte Aufgabe hinsichtlich eines Knotens in einem Kommunikationssystem wird durch einen Knoten mit den Merkmalen des Anspruchs 10 gelöst.

Vorteilhafte Ausgestaltungen und Weiterbildungen sind Gegenstand von Unteransprüchen.

Der Knoten weist Mittel zum Empfangen einer Nachricht umfassend die Angabe von mindestens einem von einem Quell-Knoten über den Knoten an einen Ziel-Knoten verlaufenden Pfad auf. Erfindungsgemäß weist der Knoten weiterhin auf: Mittel zum Speichern von Identifikationsinformationen der beiden dem mindestens einen Knoten entlang dem mindestens einen Pfad benachbarten Knoten, sowie Mittel zum Weiterleiten der Nachricht entlang des mindestens einen Pfades.

In Weiterbildung der Erfindung weist der Knoten weiterhin Mittel zum Speichern von Identifikationsinformationen eines Knotens, von welchem er eine von dem Quell-Knoten an den

Ziel-Knoten des mindestens einen Pfades gerichtete Nachricht empfängt, und betreffend welchen er keine Identifikationsinformationen als entlang dem mindestens einen Pfad benachbarter Knoten gespeichert hat, als entlang dem mindestens einen Pfad benachbarter Knoten auf.

Einer Ausgestaltung der Erfindung gemäß weist der Knoten weiterhin auf: Mittel zum Empfangen einer Angabe von einem von dem mindestens einen Pfad abweichenden weiteren Pfad zwischen dem Knoten und dem Ziel-Knoten, sowie Mittel zum Speichern von Identifikationsinformationen eines Knotens als entlang dem weiteren Pfad benachbarter Knoten.

Der erfindungsgemäße Knoten in einem Kommunikationssystem eignet sich insbesondere zur Durchführung des oben beschriebenen Verfahrens, wobei dies auch auf die Unteransprüche zutrifft. Hierzu kann er weitere geeignete Mittel umfassen.

Im folgenden wird die Erfindung anhand eines Ausführungsbeispiels näher erläutert. Dabei zeigen
- Figur 1:: eine schematische Darstellung eines ersten Ablaufs eines erfindungsgemäßen Verfahrens in einem Kommu- nikationssystem,
- Figur 2:: eine schematische Darstellung eines zweiten Ablaufs eines erfindungsgemäßen Verfahrens in dem Kommuni- kationssystem der Figur 1,
- Figur 3:: eine schematische Darstellung eines dritten Ablaufs eines erfindungsgemäßen Verfahrens in dem Kommuni- kationssystem der Figur 1,
- Figur 4:: eine schematische Darstellung eines vierten Ablaufs eines erfindungsgemäßen Verfahrens in dem Kommuni- kationssystem der Figur 1,
- Figur 5:: eine schematische Darstellung eines fünften Ablaufs eines erfindungsgemäßen Verfahrens in dem Kommuni- kationssystem der Figur 1.

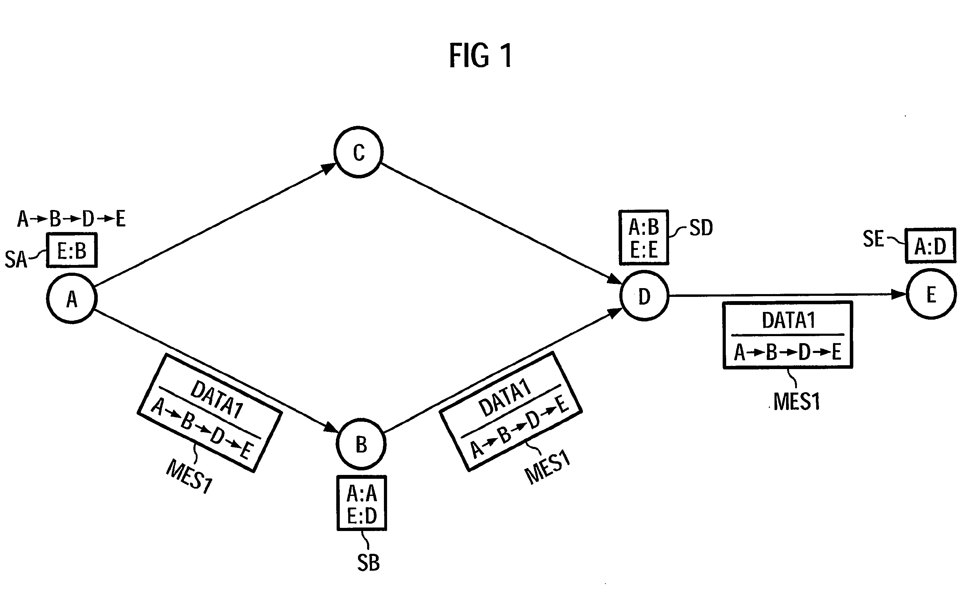

In Figur 1 ist ein Kommunikationssystem bestehend aus den Knoten A, B, C, D und E dargestellt. Bei dem Knoten A handelt es sich im folgenden um den Quell-Knoten, welcher die Versendung von Nachrichten an den Knoten E, im folgenden somit den Ziel-Knoten, beabsichtigt. Die Knoten, welche jeweils direkt miteinander kommunizieren können, sind durch Linien bzw. Pfeile verbunden. Da eine direkte Kommunikation zwischen dem Quell-Knoten A und dem Ziel-Knoten E nicht möglich ist, muss vor der Nachrichtenübertragung ein Pfad zwischen dem Quell-Knoten A und dem Ziel-Knoten E ermittelt werden. Ein möglicher Pfad zwischen dem Quell-Knoten A und dem Ziel-Knoten E verläuft über die Knoten C und D, ein anderer Pfad über die Knoten B und D.

Bei dem Kommunikationssystem kann es sich z.B. um ein zellulares Mobilfunkkommunikationssystem handeln, in welchem ein Pfad zwischen einer teilnehmerseitigen Mobilstation und einer außerhalb der Funkreichweite der Mobilstation befindlichen Basisstation ermittelt werden muss. Alternativ kann es sich bei dem Ziel-Knoten z.B. auch um einen Funkzugangspunkt eines WLAN handeln. Eine weitere Möglichkeit ist, dass die Knoten A, B, C, D und E Funkstationen eines Adhoc-Systems darstellen.

In Figur 1 wird davon ausgegangen, dass dem Quell-Knoten A der Pfad A→B→D→E zum Ziel-Knoten E bekannt ist. Diese Kenntnis kann der Quell-Knoten A z.B. über ein vorausgegangenes DSR Verfahren erlangt haben. Hierbei sendet der Quell-Knoten A eine Aufforderung zur Pfadermittlung zwischen dem Quell-Knoten A und dem Ziel-Knoten E per Broadcast aus, wobei die Aufforderung Identifikationsinformationen des Quell-Knotens A enthält. Diese Aufforderung wird dann durch das Kommunikationssystem geflutet. Jeder Knoten, welcher die Aufforderung empfängt, fügt eigene Identifikationsinformationen hinzu und leitet die Aufforderung per Broadcast weiter. Die Aufforderung erreicht schließlich den Ziel-Knoten, welcher somit den vollständigen Pfad kennt. Entlang des ermittelten Pfades sendet er eine Antwort zurück. Hierzu umfasst die Antwort die Angabe des ermittelten Pfades, so dass die Knoten des Pfades erkennen, an welchen Knoten sie die Antwort weiterleiten müssen. Die Antwort erreicht schließlich den Quell-Knoten A, welcher somit den vollständigen Pfad kennt. Gemäß diesem Verfahren können mit einer Aufforderung mehrere alternative Pfade ermittelt werden, wenn mehrere Aufforderungen über unterschiedliche Pfade den Ziel-Knoten E erreichen. Die Knoten des oder der ermittelten Pfade kennen die ermittelten Pfade nicht, so dass jede Nachricht, welche von dem Quell-Knoten A an den Ziel-Knoten E gesendet wird, die Angabe des Pfades umfassen muss, so dass die Knoten dieser Angabe entnehmen können, an welchen Knoten die Nachricht weiterzuleiten ist.

Alternativ zu dem beschriebenen Verfahren der dezentralen Pfadermittlung ist es auch möglich, dass eine Einrichtung, wie z.B. eine netzseitige Einrichtung eines zellularen Funkkommunikationssystems, den Pfad auf Anfrage des Quell-Knotens A bestimmt. Hierzu verwendet die Einrichtung Kenntnisse der Netzwerktopologie, welche ihr von den Knoten zuvor übermittelt wurden. Angaben über den bestimmten Pfad werden dann an den Quell-Knoten A gesendet.

Der Quell-Knoten A sendet in Figur 1 eine Nachricht MES1, welche aus Informationen DATA1 und der Angabe des Pfades A→B→D→E besteht, an den Knoten B. Dieser legt Identifikationsinformationen des ihm in Richtung des Quell-Knotens A benachbarten Knotens, d.h. des Quell-Knotens A, und des ihm in Richtung des Ziel-Knotens E benachbarten Knotens, d.h. des Knotens D, in einem Speicher SB ab. Danach leitet der Knoten B die Nachricht MES1 an den ihm in Richtung des Ziel-Knotens E benachbarten Knoten, d.h. an den Knoten D, weiter. Dieser legt Identifikationsinformationen des ihm in Richtung des Quell-Knotens A benachbarten Knotens, d.h. des Knotens B, und des ihm in Richtung des Ziel-Knotens E benachbarten Knotens, d.h. des Knotens E, in einem Speicher SD ab. Weiterhin leitet der Knoten D die Nachricht MES1 an den Ziel-Knoten E weiter, welcher Identifikationsinformationen des ihm in Richtung des Quell-Knotens A benachbarten Knotens, d.h. des Knotens D, in einem Speicher SE ablegt. Auch der Quell-Knoten A legt Identifikationsinformationen des ihm in Richtung des Ziel-Knotens E benachbarten Knotens, d.h. des Knotens B, ab. Somit kennen sowohl der Quell-Knoten A, als auch der Ziel-Knoten E, sowie auch die Knoten B und D des Pfades ihre Nachbarn für den nächsten Hop in Richtung Quell-Knoten A und/oder in Richtung Ziel-Knoten E. Die jeweiligen Identifikationsinformationen der benachbarten Knoten entnehmen die Knoten B, D und E aus der Angabe des Pfades A→B→D→E der Nachricht MES1.

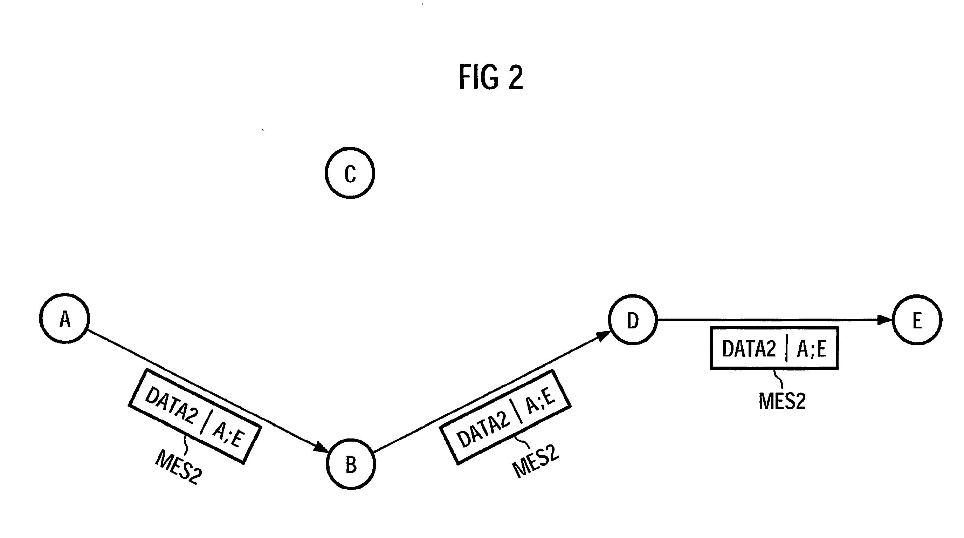

Figur 2 zeigt die Übertragung einer Nachricht MES2 von dem Quell-Knoten A an den Ziel-Knoten E. Die Nachricht MES2 besteht hierbei aus Informationen DATA2 und Identifikationsinformationen des Quell-Knotens A und des Ziel-Knotens E. Die Angabe des Ziel-Knotens E ist nötig, da die Knoten B und D anhand dieser Information entscheiden, an welchen Knoten die Nachricht MES2 weitergeleitet wird. Die Angabe des Quell-Knotens A ist vorteilhaft für eventuelle Fehlermeldungen. Eine Angabe über den für die Übertragung der Nachricht MES2 zu verwendenden Pfad beinhaltet die Nachrichte MES2 nicht. Dies führt zu einer Einsparung von Übertragungsressourcen, da der Anteil von Informationen DATA2 am Gesamtumfang der Nachricht MES2 größer ist als z.B. der Anteil von Informationen DATA1 am Gesamtumfang der Nachricht MES1. Die Knoten B und D des Pfades A→B→D→E erkennen anhand der Nachricht MES2, dass die Nachricht MES2 für den Ziel-Knoten E bestimmt ist. Da die Knoten B und D Identifikationsinformationen betreffend den jeweilig benachbarten Knoten D und E entlang des Pfades A→B→D→E gespeichert haben, leiten sie die Nachricht MES2 gemäß den gespeicherten Identifikationsinformationen weiter.

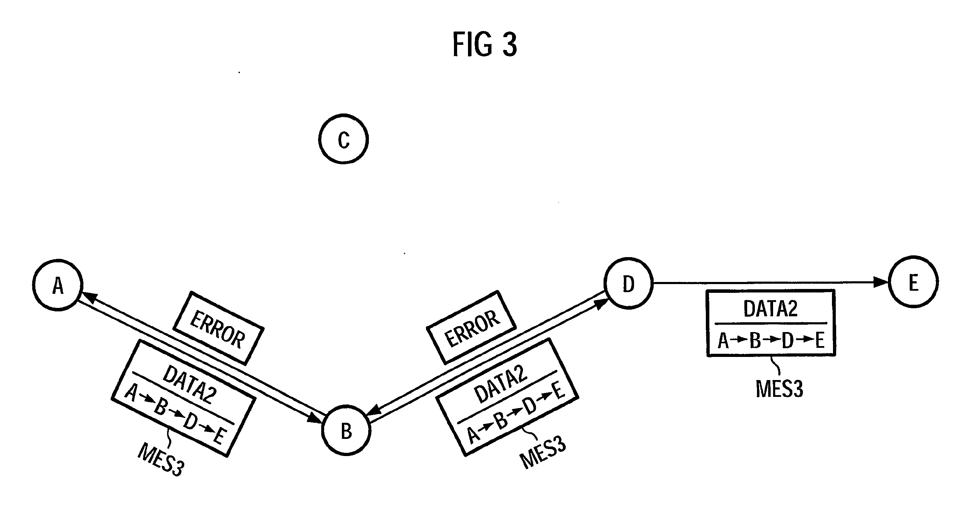

Ein Problem tritt dann auf, wenn die Nachricht MES1, welche die Angabe des Pfades A→B→D→E enthält, verloren geht, d.h. wenn nicht alle Knoten B und D des Pfades die Nachricht MES1 empfangen. In Figur 3 wird davon ausgegangen, dass die Übertragung der Nachricht MES1 zwischen dem Knoten B und D fehlgeschlagen ist. Somit hat der Knoten D keine Identifikationsinformationen betreffend die benachbarten Knoten entlang des Pfades A→B→D→E gespeichert. Erreicht den Knoten D somit die Nachricht MES2 von dem Quell-Knoten A für den Ziel-Knoten E, so ist dem Knoten D nicht bekannt, an welchen Knoten die Nachricht MES2 weiterzuleiten ist. Empfängt der Knoten D eine solche Nachricht, welche an den Ziel-Knoten E adressiert ist, ohne dass die Nachricht Angaben über den zu verwendenden Pfad beinhaltet, so erzeugt der Knoten D eine Fehlermeldung ERROR, welche über den Knoten B zurück an den Quell-Knoten A gesendet wird. Hierzu ist es vorteilhaft, wenn die Nachricht ein Datenfeld enthält, dass dem Knoten D die Identifizierung des Knotens, von welchem er die Nachricht empfangen hat, d.h. des Knotens B, ermöglicht. Dadurch wird gewährleistet, dass ein gültiger Pfad zurück zum Quell-Knoten A existiert, welcher zur Versendung der Fehlermeldung ERROR verwendet werden kann. Derartige Datenfelder sollten insbesondere bei der Übertragung der ersten Nachricht über einen Pfad, welche keine Angaben über diesen zu verwendenden Pfad beinhaltet, eingesetzt werden.

Nach Empfang der Fehlermeldung ERROR versendet der Quell-Knoten A eine Nachricht MES3, welche die Informationen DATA2, bei deren Übertragung ein Fehler aufgetreten ist, und die Angabe des Pfades A→B→D→E beinhaltet. Die Knoten B, D und E können dann wie in Figur 1 dargestellt Identifikationsinformationen ihrer Nachbarn entlang des Pfades speichern. Eine erneute Speicherung muss jedoch nicht durch den Knoten B erfolgen, da dieser Identifikationsinformationen seiner Nachbarn bereits bei der Versendung der Nachricht MES1 abgelegt hat. Die nächste Nachricht kann dann von dem Quell-Knoten A wieder ohne Angabe des zu verwendenden Pfades gesendet werden.

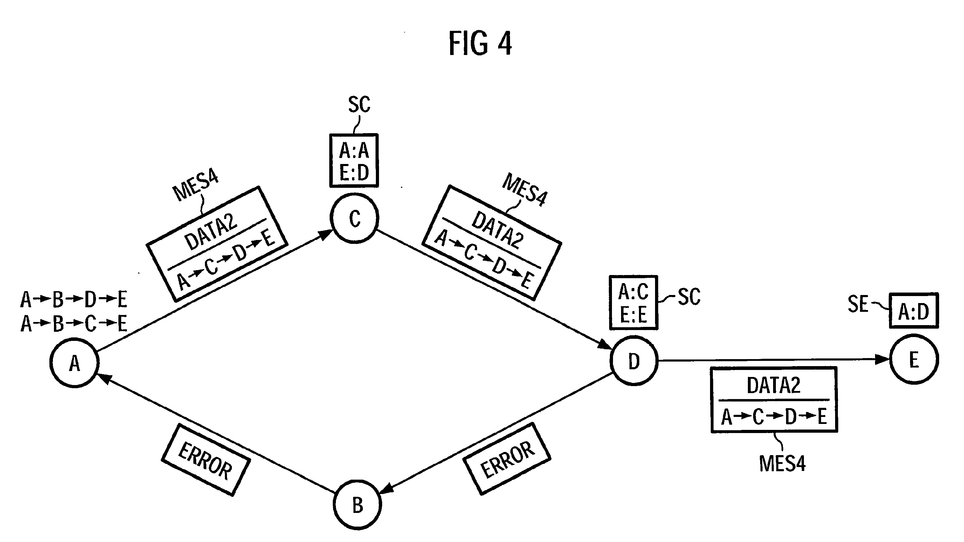

In Figur 4 ist der Fall dargestellt, dass dem Quell-Knoten A nicht nur der Pfad A→B→D→E, sondern auch der Pfad A→C→D→E bekannt ist. Nach Empfang der Fehlermeldung ERROR des Pfades A→B→D→E beschließt der Quell-Knoten A, den Pfad A→B→D→E zur Nachrichtenübertragung an den Ziel-Knoten E zu verwenden. Daher versendet der Quell-Knoten A eine Nachricht MES4, welche aus den Informationen DATA2, bei deren Übertragung ein Fehler aufgetreten ist, und der Angabe des Pfades A→B→D→E besteht. Der Knoten C legt nach der Auswertung der Nachricht MES4 Identifikationsinformationen seines Nachbarknotens entlang des Pfades in Richtung des Quell-Knotens A, d.h. des Quell-Knotens A, und seines Nachbarknotens entlang des Pfades in Richtung des Ziel-Knotens E, d.h. des Knotens D, in den Speicher SC ab und leitet die Nachricht MES4 an den Knoten D weiter. Ebenso legt der Knoten D Identifikationsinformationen der beiden Knoten C und E in den Speicher SD ab, während der Ziel-Knoten E Identifikationsinformationen des Knotens D in den Speicher SE und der Quell-Knoten A Identifikationsinformationen des Knotens C in den Speicher SA ablegt. Im folgenden kann der Quell-Knoten A Nachrichten an den ZielKnoten E über den Pfad A→B→D→E versenden, ohne den zu verwendenden Pfad anzugeben.

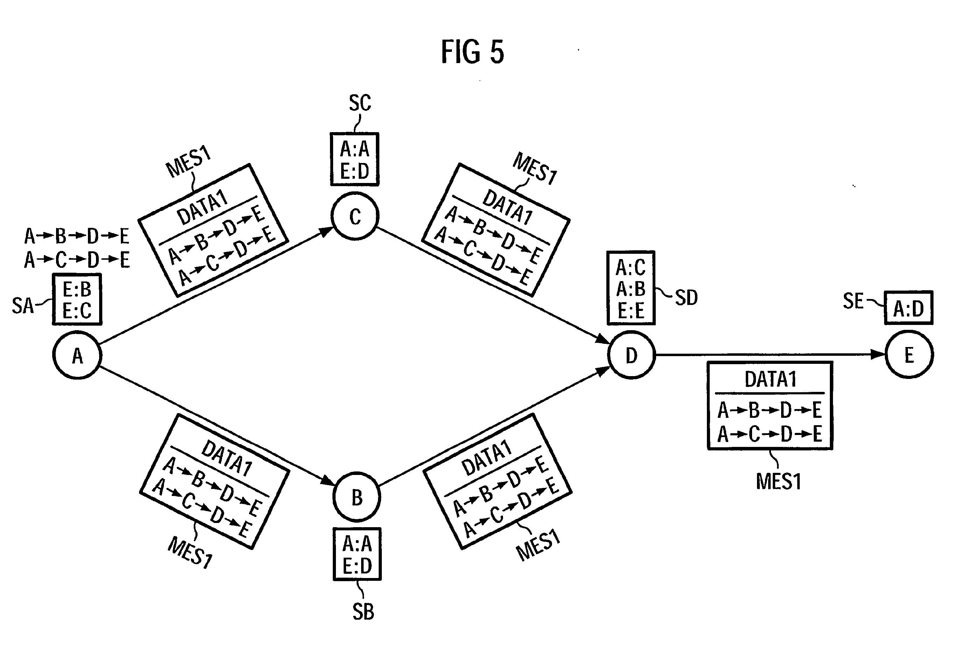

Während in Figur 4 der Pfad A→B→D→E erst initialisiert wurde, nachdem der Quell-Knoten A die Fehlermeldung ERROR des Pfades A→B→D→E empfangen hat, ist es wie in Figur 5 gezeigt auch möglich, dass die Initialisierung der beiden Pfade A→B→D→E und A→B→D→E parallel durchgeführt wird. Hierzu versendet der Quell-Knoten A die Nachricht MES1 gemäß Figur 1, wobei die Nachricht MES1 neben den Informationen DATA1 und der Angabe des Pfades A→B→D→E auch die Angabe des Pfades A→B→D→E beinhaltet. In dem Speicher SA des Quell-Knotens A werden dann zwei Identifikationsinformationen für den in Richtung des Ziel-Knotens benachbarten Knoten abgelegt, d.h. die Identifikationsinformation der beiden Knoten B und C. Die Speicherung von Identifikationsinformationen in den Speichern SB und SC der Knoten B und C erfolgt wie oben beschrieben. Der Knoten D, über welchen beide Pfade A→B→D→E und A→B→D→E verlaufen, legt in den Speicher SD für die beiden Pfade Identifikationsinformationen eines unterschiedlichen Nachbarn, d.h. der Knoten B und C, ab. Der Quell-Knoten A kann nun nach erfolgter Initialisierung beider Pfade A→B→D→E und A→B→D→E Nachrichten wahlweise über einen der beiden Pfade A→B→D→E und A→B→D→E an den Ziel-Knoten E versenden, indem er die jeweilige Nachricht an den Knoten B oder an den Knoten C adressiert. Die Entscheidung darüber, welcher Pfad verwendet wird, kann von Kriterien wie der Länge der Pfade, der Zeitverzögerung bei der Pfadermittlung, von Übertragungsqualitäten auf Pfaden oder auch vom Alter der Pfade abhängig gemacht werden. Wenn die Entscheidung über den zu verwendenden Pfad vom Quell-Knoten getroffen wird, kann dieser gegebenenfalls der Nachricht neben der Angabe des Ziel-Knotens Informationen beifügen kann, welcher der Pfade bei der Weiterleitung zu verwenden ist. Es ist jedoch auch möglich, dass ein Knoten, dem mehrere Knoten zur Weiterleitung einer Nachricht an einen Ziel-Knoten bekannt sind, eine Entscheidung über den zu verwendenden Pfad trifft.

Die Verwendung eines Mehrzahl von Pfaden gemäß Figur 4 oder 5 hat den Vorteil, dass in dem Fall, dass eine Nachrichtenübertragung über einen der Pfade nicht mehr vollständig durchgeführt werden kann, weil eine Verbindung zwischen zwei benachbarten Knoten des Pfades unterbrochen ist, ein anderer Pfad verwendet werden kann. Steht hingegen kein anderer Pfad zur Verfügung, so muss ein neuer Pfad ermittelt werden, wobei durch die Versendung der Routing-Nachrichten zur Pfadermittlung Übertragungsressourcen in Anspruch genommen werden.

Die Erfindung spart Übertragungsressourcen auf zweifache Weise ein: durch die Möglichkeit, eine Mehrzahl von Pfaden zu verwenden, wird die Anzahl der benötigten Routing-Nachrichten, welche zur Pfadermittlung eingesetzt werden, reduziert. Durch die Speicherung der benachbarten Knoten in jedem Knoten, über welchen ein Pfad verläuft, kann bei der Nachrichtenübertragung über den jeweiligen Pfad eine Angabe des Pfades unterbleiben, wodurch redundante Signalisierungsinformationen eingespart werden.

Empfängt ein Knoten eine an den Ziel-Knoten gerichtete Nachricht von dem Quell-Knoten über einen anderen Knoten, welchen er nicht in seinem Speicher als benachbarter Knoten auf Seiten des Quell-Knotens abgelegt hat, so kann er diesen Knoten anstelle des gespeicherten Knotens abspeichern. Auf diese Weise wird gewährleistet, dass ein abgespeicherter Pfad zurück zum Quell-Knoten einsatzfähig ist. Dies hat weiterhin den Vorteil, dass der Pfad geändert werden kann, ohne dass der Quell-Knoten Kenntnis über die Änderung haben muss.

Insbesondere in radialsymmetrischen Netzen leiten vor allem Knoten in der Nähe des Zentrums viele Nachrichten weiter. Teile eines neu ermittelten Pfades von einem Quell-Knoten in Richtung Zentrum sind dann auch für einen Pfad von einem anderen Quell-Knoten in Richtung Zentrum geeignet. Daher kann ein Knoten, welcher Kenntnis von einem neuen Pfad zu einem Ziel-Knoten erlangt hat, z.B. indem er bei einer Nachrichtenübertragung entlang dem neuen Pfad den benachbarten Knoten in Richtung dieses Ziel-Knotens in seinen Speicher ablegt hat, Nachrichten aller Quell-Knoten, welche an diesen Ziel-Knoten adressiert sind, über den neuen Pfad weiterleiten. Dies ist vorteilhaft, da hierdurch aktuelle Informationen über Pfade genutzt werden und alte Pfade aktualisiert werden. Wird ein Pfad über einen bestimmten Zeitraum nicht genutzt, so können die Knoten die diesem Pfad zugeordneten Identifikationsinformationen der benachbarten Knoten aus ihren Speichern löschen.

## Patentansprüche

1. Verfahren zur Übertragung von Informationen in einem Kommunikationssystem mit einer Mehrzahl von Knoten (A, B, C, D, E),
wobei mindestens ein Knoten (B, C, D) eine Nachricht (MES1; MES3; MES4) umfassend die Angabe von mindestens einem von einem Quell-Knoten (A) über den mindestens einen Knoten (B, C, D) zu einem Ziel-Knoten (E) verlaufenden Pfad empfängt,
**dadurch gekennzeichnet,**
**dass** der mindestens eine Knoten (B, C, D) unter Verwendung der Angabe des mindestens einen Pfades Identifikationsinformationen betreffend die beiden dem mindestens einen Knoten (B, C, D) entlang dem mindestens einen Pfad benachbarten Knoten (A, B, C, D, E) speichert und die Nachricht (MES1; MES3; MES4) entlang dem mindestens einen Pfad weiterleitet.

2. Verfahren nach Anspruch 1,
**dadurch gekennzeichnet,**
**dass** die Nachricht (MES1; MES3; MES4) umfassend die Angabe des mindestens einen Pfades von dem Quell-Knoten (A) des mindestens einen Pfades gesendet wird.

3. Verfahren nach Anspruch 1 oder 2,
**dadurch gekennzeichnet,**
**dass** mindestens eine weitere Nachricht (MES2), welche keine Angaben über den zur Übertragung der mindestens einen weiteren Nachricht zu verwendenden Pfad umfasst, von dem Quell-Knoten (A) über den mindestens einen Pfad zu dem Ziel-Knoten (E) unter Verwendung von gespeicherten Identifikationsinformationen übertragen wird.

4. Verfahren nach Anspruch 3,
**dadurch gekennzeichnet,**
**dass** nach einer gescheiterten Übertragung der weiteren Nachricht (MES2) von dem Quell-Knoten (A) über den mindestens einen Pfad zu dem Ziel-Knoten (E), welche keine Angaben über den zur Übertragung zu verwendenden Pfad umfasst, eine Nachricht (MES1; MES3; MES4) umfassend die Angabe des mindestens einen Pfades von dem Quell-Knoten (A) des mindestens einen Pfades gesendet wird.

5. Verfahren nach einem der Ansprüche 1 bis 4,
**dadurch gekennzeichnet,**
**dass** der mindestens eine Pfad unter Mitwirkung einer Einrichtung, welcher Nachbarschaftsbeziehungen zwischen Knoten (A, B, C, D, E) des Kommunikationssystems bekannt sind, ermittelt wurde.

6. Verfahren nach einem der Ansprüche 1 bis 5,
**dadurch gekennzeichnet,**
**dass** alle Knoten (B, C, D), über welche der mindestens eine Pfad verläuft, die Nachricht (MES1; MES3; MES4) umfassend die Angabe des mindestens einen Pfades empfangen und Identifikationsinformationen betreffend die beiden dem jeweiligen Knoten (B, C, D) entlang dem Pfad benachbarten Knoten (A, B, C, D, E) speichern.

7. Verfahren nach einem der Ansprüche 1 bis 6,
**dadurch gekennzeichnet,**
**dass** der mindestens eine Knoten (B, C, D) eine Nachricht (MES1) umfassend die Angabe von mehreren über den mindestens einen Knoten (B, C, D) verlaufenden Pfaden empfängt und Identifikationsinformationen der jeweils beiden dem mindestens einen Knoten (B, C, D) entlang den mehreren Pfaden benachbarten Knoten (A, B, C, D, E) speichert.

8. Verfahren nach einem der Ansprüche 1 bis 7,
**dadurch gekennzeichnet,**
**dass** der mindestens eine Knoten (D) nach dem Empfang einer von dem Quell-Knoten (A) an den Ziel-Knoten (E) des mindestens einen Pfades gerichteten Nachricht von einem Knoten (B, C), betreffend welchen er keine Identifikationsinformationen als entlang dem mindestens einen Pfad benachbarter Knoten gespeichert hat, Identifikationsinformationen dieses Knotens (B, C) als entlang dem mindestens einen Pfad benachbarter Knoten speichert.

9. Verfahren nach einem der Ansprüche 1 bis 8,
**dadurch gekennzeichnet,**
**dass** der mindestens eine Knoten (B, C, D) nach dem Empfang einer Angabe von einem von dem mindestens einen Pfad abweichenden weiteren Pfad zwischen dem mindestens einen Knoten (B, C, D) und dem Ziel-Knoten (E) Identifikationsinformationen des dem mindestens einen Knoten (B, C, D) entlang dem weiteren Pfad benachbarten Knotens speichert.

10. Knoten (B, C, D) in einem Kommunikationssystem,
- wobei der Knoten (B, C, D) Mittel zum Empfangen einer Nachricht (MES1; MES3; MES4) umfassend die Angabe von mindestens einem von einem Quell-Knoten (A) über den Knoten (B, C, D) an einen Ziel-Knoten (E) verlaufenden Pfad aufweist,
**dadurch gekennzeichnet,**
**dass** der Knoten (B, C, D) weiterhin aufweist:
- Mittel zum Speichern (SB, SC, SD) von Identifikationsinformationen der beiden dem mindestens einen Knoten (B, C, D) entlang dem mindestens einen Pfad benachbarten Knoten (A, B, C, D, E) und
- Mittel zum Weiterleiten der Nachricht (MES1; MES3; MES4) entlang dem mindestens einen Pfad.

11. Knoten (B, C, D) nach Anspruch 10,
**dadurch gekennzeichnet,**
**dass** der Knoten (B, C, D) weiterhin aufweist:
- Mittel zum Speichern (SB, SC, SD) von Identifikationsinformationen eines Knotens, von welchem er eine von dem Quell-Knoten (A) an den Ziel-Knoten (E) des mindestens einen Pfades gerichtete Nachricht empfängt, und betreffend welchen er keine Identifikationsinformationen als entlang dem mindestens einen Pfad benachbarter Knoten gespeichert hat, als entlang dem mindestens einen Pfad benachbarter Knoten.

12. Knoten (B, C, D) nach Anspruch 10 oder 11,
**dadurch gekennzeichnet,**
**dass** der Knoten (B, C, D) weiterhin aufweist:
- Mittel zum Empfangen einer Angabe von einem von dem mindestens einen Pfad abweichenden weiteren Pfad zwischen dem Knoten (B, C, D) und dem Ziel-Knoten (E), und
- Mittel zum Speichern (SB, SC, SD) von Identifikationsinformationen eines Knotens als entlang dem weiteren Pfad benachbarter Knoten.

## Claims

1. Method for transmitting information in a communication system having a multiplicity of nodes (A, B, C, D, E),
wherein at least one node (B, C, D) receives a message (MES1; MES3; MES4) comprising the specification of at least one path extending from a source node (A) via the at least one node (B, C, D) to a destination node (E),
**characterized**
**in that** the at least one node (B, C, D), by using the specification of the at least one path stores identification information relating to the two nodes (A, B, C, D, E) adjacent to the at least one node (B, C, D) along the at least one path and forwards the message (MES1; MES3; MES4) along the at least one path.

2. Method according to Claim 1,
**characterized**
**in that** the message (MES1; MES3; MES4) comprising the specification of the at least one path is sent by the source node (A) of the at least one path.

3. Method according to Claim 1 or 2,
**characterized**
**in that** at least one further message (MES2) which does not comprise any specifications about the path to be used for the transmission of the at least one further message is transmitted via the source node (A) via the at least one path to the destination node (E) by using stored identification information.

4. Method according to Claim 3,
**characterized**
**in that** after failed transmission of the further message (MES2) from the source node (A) via the at least one path to the destination node (E), which does not comprise any specifications about the path to be used for the transmission, a message (MES1; MES3; MES4) comprising the specification of the at least one path is sent by the source node (A) of the at least one path.

5. Method according to one of Claims 1 to 4,
**characterized**
**in that** the at least one path has been determined with the cooperation of a facility to which neighbourhood relations between nodes (A, B, C, D, E) of the communication system are known.

6. Method according to one of Claims 1 to 5,
**characterized**
**in that** all nodes (B, C, D) via which the at least one path extends, receive the message (MES1; MES3; MES4) comprising the specification of the at least one path and store identification information relating to the two nodes (A, B, C, D, E) adjacent to the respective nodes (B, C, D) along the path.

7. Method according to one of Claims 1 to 6,
**characterized**
**in that** the at least one node (B, C, D) receives a message (MES1) comprising the specification of a number of paths extending via the at least one node (B, C, D) and stores identification information of the respective two nodes (A, B, C, D, E) adjacent to the at least one node (B, C, D) along the several paths.

8. Method according to one of Claims 1 to 7,
**characterized**
**in that** the at least one node (D), after receiving a message, directed from the source node (A) to the destination node (E) of the at least one path from the node (B, C) with respect to which it has not stored any identification information as node adjacent along the at least one path, stores identification information of this node (B, C) as node adjacent along the at least one path.

9. Method according to one of Claims 1 to 8,
**characterized**
**in that** the at least one node (B, C, D), after receiving a specification of a further path, deviating from the at least one path, between the at least one node (B, C, D) and the destination node (E), stores identification information of the node adjacent to the at least one node (B, C, D) along the further path.

10. Node (B, C, D) in a communication system,
- wherein the node (B, C, D) has means for receiving a message (MES1; MES3; MES4) comprising the specification of at least one path extending from a source node (A) via the node (B, C, D) to a destination node (E),
**characterized**
**in that** the node (B, C, D) also has:
- means for storing (SB, SC, SD) identification information of the two nodes (A, B, C, D, E) adjacent to the at least one node (B, C, D) along the at least one path and
- means for forwarding the message (MES1; MES3; MES4) along the at least one path.

11. Node (B, C, D) according to Claim 10,
**characterized**
**in that** the node (B, C, D) also has:
- means for storing (SB, SC, SD) identification information of a node from which it receives a message directed from the source node (A) to the destination node (E) of the at least one path, and with respect to which it has not stored any identification information as node adjacent along the at least one path, as node adjacent along the at least one path.

12. Node (B, C, D) according to Claim 10 or 11,
**characterized**
**in that** the node (B, C, D) also has:
- means for receiving a specification of a further path, deviating from the at least one path, between the node (B, C, D) and the destination node (E), and
- means for storing (SB, SC, SD) identification information of a node as node adjacent along the further path.

## Revendications

1. Procédé pour la transmission d'informations dans un système de communication comprenant une pluralité de noeuds (A, B, C, D, E),
au moins un noeud (B, C, D) recevant un message (MES1; MES3; MES4) incluant l'indication d'au moins un chemin allant d'un noeud source (A) vers un noeud cible (E) en passant par le au moins un noeud (B, C, D),
**caractérisé en ce que**
le au moins un noeud (B, C, D) enregistre des informations d'identification concernant les deux noeuds (A, B, C, D, E) voisins du au moins un noeud (B, C, D) le long du au moins un chemin en utilisant l'indication du au moins un chemin et transmet le message (MES1; MES3; MES4) le long du au moins un chemin.

2. Procédé selon la revendication 1,
**caractérisé en ce que**
le message (MES1; MES3; MES4) incluant l'indication du au moins un chemin est envoyé par le noeud source (A) du au moins un chemin.

3. Procédé selon la revendication 1 ou 2,
**caractérisé en ce qu'**au moins un autre message (MES2) qui n'inclut aucune indication sur le chemin à utiliser pour la transmission du au moins un autre message est transmis du noeud source (A) vers le noeud cible (E) sur le au moins un chemin en utilisant des informations d'identification enregistrées.

4. Procédé selon la revendication 3,
**caractérisé en ce que,**
après un échec d'une transmission de l'autre message (MES2), qui ne contient aucune indication sur le chemin à utiliser pour la transmission, du noeud source (A) vers le noeud cible (E) sur le au moins un chemin, un message (MES1; MES3; MES4) incluant l'indication du au moins un chemin est envoyé par le noeud source (A) du au moins un chemin.

5. Procédé selon l'une des revendications 1 à 4,
**caractérisé en ce que**
le au moins un chemin a été déterminé à l'aide d'un dispositif qui connaît les relations de voisinage entre les noeuds (A, B, C, D, E) du système de communication.

6. Procédé selon l'une des revendications 1 à 5,
**caractérisé en ce que**
tous les noeuds (B, C, D) par lesquels le au moins un chemin passe reçoivent le message (MES1; MES3; MES4) incluant l'indication du au moins un chemin et enregistrent des informations d'identification concernant les deux noeuds (A, B, C, D, E) voisins du noeud respectif (B, C, D) le long du chemin.

7. Procédé selon l'une des revendications 1 à 6,
**caractérisé en ce que**
le au moins un noeud (B, C, D) reçoit un message (MES1) incluant l'indication de plusieurs chemins passant par le au moins un noeud (B, C, D) et enregistre des informations d'identification des deux noeuds (A, B, C, D, E) respectivement voisins du au moins un noeud (B, C, D) le long des plusieurs chemins.

8. Procédé selon l'une des revendications 1 à 7,
**caractérisé en ce que,**
le au moins un noeud (D), après la réception d'un message adressé par le noeud source (A) au noeud cible (E) du au moins un chemin de la part d'un noeud (B, C) concernant lequel il n'a pas enregistré d'informations d'identification en tant que noeud voisin le long du au moins un chemin, enregistre des informations d'identification de ce noeud (B, C) en tant que noeud voisin le long du au moins un chemin.

9. Procédé selon l'une des revendications 1 à 8,
**caractérisé en ce que,**
après la réception d'une indication d'un autre chemin s'écartant du au moins un chemin entre le au moins un noeud (B, C, D) et le noeud cible (E), le au moins un noeud (B, C, D) enregistre des informations d'identification du noeud voisin du au moins un noeud (B, C, D) le long de l'autre chemin.

10. Noeud (B, C, D) dans un système de communication,
- le noeud (B, C, D) comprenant des moyens pour la réception d'un message (MES1; MES3; MES4) incluant l'indication d'au moins un chemin menant d'un noeud source (A) à un noeud cible (E) en passant par le noeud (B, C, D),
**caractérisé en ce que**
le noeud (B, C, D) comprend, en outré
- des moyens pour enregistrer (SB, SC, SD) des informations d'identification des deux noeuds (A, B, C, D, E) voisins du au moins un noeud (B, C, D) le long du au moins un chemin et
- des moyens pour transmettre le message (MES1; MES3; MES4) le long du au moins un chemin.

11. Noeud (B, C, D) selon la revendication 10,
**caractérisé en ce que**
le noeud (B, C, D) comprend, en outre :
- des moyens pour enregistrer (SB, SC, SD) des informations d'identification d'un noeud, dont il reçoit un message adressé par le noeud source (A) au noeud cible (E) du au moins un chemin et concernant lequel il n'a pas enregistré d'informations d'identification en tant que noeud voisin le long du au moins un chemin, en tant que noeud voisin le long du au moins un chemin.

12. Noeud (B, C, D) selon la revendication 10 ou 11,
**caractérisé en ce que**
le noeud (B, C, D) comprend, en outre :
- des moyens pour la réception d'une indication d'un autre chemin s'écartant du au moins un chemin entre le noeud (B, C, D) et le noeud cible (E) et
des moyens pour enregistrer (SB, SC, SD) des informations d'identification d'un noeud en tant que noeud voisin le long de l'autre chemin.
